# FASCICULE DE BREVET EUROPEEN

(11) **EP 2 038 342 B1**
(45) Date de publication et mention de la délivrance du brevet: **15.12.2010**
(21) Numéro de dépôt: 07766005.8
(22) Date de dépôt: 04.05.2007
(51) Int. Cl.: C08K 9/00, C08K 9/08, C08K 7/00, C08J 3/22, C08J 3/12, B29B 7/90

(54) **PROCEDE DE FABRICATION D'UN MELANGE-MAITRE POUR MOULAGE PAR INJECTION OU PAR EXTRUSION**
VERFAHREN ZUR HERSTELLUNG EINES MASTERBATCH FÜR DEN SPRITZGUSS ODER FÜR DIE EXTRUSION
PROCESS FOR MANUFACTURING A MASTERBATCH FOR INJECTION MOULDING OR FOR EXTRUSION

(30) Priorité: 07.07.2006 FR 0652865
(43) Date de publication de la demande: 25.03.2009
(73) Titulaire: Commissariat à l'Énergie Atomique et aux Énergies Alternatives, 75015 Paris (FR)
(72) Inventeur: FEDERZONI, Luc, 38300 Bourgoin-Jallieu (FR); REVIRAND, Pascal, 38120 Saint Egrève (FR); BAILLEUX, Michel, 38220 Saint Barthélemy de Sechilienne (FR)
(74) Mandataire: Vuillermoz, Bruno
(86) Numéro de dépôt international: PCT/FR2007/051225
(87) Numéro de publication internationale: WO 2008/003877

(56) Documents cités:
- WO-A-98/18973
- DE-A1- 19 935 276
- JP-A- 2006 096 802
- LIU L ET AL: "Mixing and characterisation of 316L stainless steel feedstock for micro powder injection molding" MATERIALS CHARACTERIZATION, ELSEVIER, NEW YORK, NY, US, vol. 54, no. 3, mars 2005 (2005-03), pages 230-238, XP004772640 ISSN: 1044-5803
- ZHOU JICHENG ET AL.: "Extrusion moulding of hard.metal powder using a novel binder system" JOURNAL OF MATERIALS PROCESSING TECHNOLOGY, vol. 137, 2003, pages 21-24, XP002408360 cité dans la demande

## Description

### DOMAINE TECHNIQUE

La présente invention a trait à la fabrication d'objets par les techniques de moulage par injection ("*powder injection molding*" ou PIM) ou de microPIM ("*micro powder injection molding*"), ou encore de moulage par extrusion.

Plus précisément, elle concerne un nouveau procédé de fabrication des mélanges - maîtres utilisés dans le moulage par injection ou par extrusion, qui repose sur l'utilisation d'un double cycle de granulation.

L'utilisation de mélanges - maîtres obtenus par ce procédé permet notamment d'obtenir des pièces avec une homogénéité de répartition quasiment parfaite.

### ETAT ANTERIEUR DE LA TECHNIQUE

Les techniques de moulage par injection ou par extrusion permettent la réalisation de divers objets, notamment :
- des micro objets avec des détails géométriques très fins (micrométriques suivant la taille des particules utilisées) ;
   ex : MST, micro poulie, micro engrenage ;
- des objets macroscopiques avec des texturations de surface très fines (micrométriques suivant la taille des particules utilisées) ;
   ex : boîtier de montre.

Dans un procédé de moulage par injection (PIM) ou par extrusion, la première étape consiste à obtenir un mélange-maître (ou "*feedstock*") adapté à l'application visée.

Les mélanges - maîtres sont constitués d'un mélange de matière organique (ou liant polymérique) et de poudres inorganiques (métalliques ou céramiques). Le taux de charge correspondant à la proportion volumique de poudre dans le mélange est généralement de l'ordre de 50 à 70%.

Ensuite, le mélange - maître s'injecte ou s'extrude comme un thermoplastique. Ensuite, la pièce est déliantée puis frittée.

Le taux de charge dans le mélange - maître est un paramètre critique. En effet, plus le taux de charge est important, moins le retrait au frittage est conséquent. Les fabricants cherchent donc à augmenter au maximum le taux de charge, pour limiter le plus possible les retraits au frittage.

Ainsi, des travaux relatent la sélection de granulométrie optimisée afin d'augmenter ce taux de charge. Ces solutions passent le plus souvent par la sélection de granulométries bi-modales et de morphologies le plus souvent sphériques.

Par conséquent, ces techniques sont largement utilisées pour la fabrication de pièces à base :
- de poudres fabriquées par atomisation au gaz ;
- de poudres fabriquées par le procédé carbonyl, procédé qui permet d'obtenir des poudres fines sphériques ;
- de procédés chimiques qui permettent d'obtenir des poudres sphériques.

Le plus souvent, ces procédés de synthèse de poudres sont coûteux et limitent le potentiel de valorisation des techniques d'injection ou d'extrusion.

Par ailleurs, la technique de moulage à injection (PIM) trouve des applications dans le domaine des poudres ultrafines. On parle alors de microPIM.

Toutefois, il a été observé que l'utilisation de ces poudres ultrafines conduit à l'augmentation de la viscosité des mélanges à iso taux de charges. Ce phénomène s'explique par l'augmentation de la surface spécifique des poudres, rendant les effets de surface prépondérants dans le comportement rhéologique des mélanges.

Ainsi, les développements en cours se heurtent à ce problème. Actuellement, les seules solutions développées consistent à remplacer les mélanges traditionnels par des mélanges à base de cire à très faible viscosité. Ces solutions ont toutefois des limites et l'obtention de mélanges- maîtres à base de nanopoudres apparaît comme impossible. Or, la valorisation de cette voie pour la fabrication de microcomposants (détails très fins), de composants à très bon état de surface (faible Ra), ou tout simplement de composants avec de très bonnes propriétés mécaniques (nanomatériaux) apparaît comme extrêmement prometteuse.

De manière classique, l'opération de synthèse de mélanges - maîtres est réalisée par mélange à chaud (malaxage) de ses constituants : plastifiant, liant, poudres, surfactant. Le malaxage est suivi le plus souvent d'une opération d'extrusion afin de terminer l'homogénéisation du mélange. Par ce type de technique, on ne peut réaliser que des feedstocks présentant des taux de charges trop faibles pour permettre la réalisation d'objets à partir de poudres nanométriques (< à 100 nm). A titre d'exemple, l'utilisation de poudre sphérique de 50 nm dans un mélange PEG/Poly éthylène conduit à une limite de taux de charge de 42% par le procédé traditionnel. Ce taux de charge est insuffisant pour éviter un effondrement des pièces après déliantage.

En outre et bien souvent, l'homogénéité des mélanges - maîtres demeure insuffisante.

Beaucoup de travaux relatent la difficulté d'obtenir un mélange homogène. La multiplication des opérations d'extrusion est une solution partiellement satisfaisante sur le plan industriel.

Or une bonne homogénéité est importante pour deux aspects :
- le déliantage n'est correctement réalisable que sur des mélanges homogènes. Le risque de fissuration est d'autant moins important ;
- lors de l'opération de frittage, un mélange hétérogène conduit à des retraits irréguliers, ce qui donne le plus souvent des pièces distordues, voire fissurées. ,

Pour le microPIM, le problème de l'homogénéité est plus important encore que pour le PIM traditionnel : du fait de l'utilisation de poudre ultrafines, le déliantage est encore plus délicat car les gaz et les liquides doivent pouvoir s'évacuer par des micro-canaux. Par ailleurs, l'homogénéité du mélange est encore plus difficile à obtenir car les poudres fines ont tendance à s'agglomérer. C'est pour cette raison qu'on a l'habitude d'incorporer des surfactants, de type acide stéarique, acide oléique, .... Ces surfactants contribuent aussi à diminuer le taux de charge dans le mélange.

Les problèmes techniques liés aux techniques traditionnelles de fabrication de mélanges - maîtres sont illustrés dans le document: "Mixing and characterisation of 316L stainless steel feedstock for micro powder injection molding", L. Liu et al, Materials Characterization 54 (2005) 230-238 pour le PIM et dans le document "Extrusion moulding of hard-metal powder using a novel binder system", J. Zhou et al, Journal of Materials Processing Technology 137 (2003) 21-24 pour l'extrusion.

Il existe donc un besoin évident de développer de nouveaux mélanges - maîtres pour moulage par injection ou extrusion, permettant notamment d'intégrer des nanopoudres, des forts taux de charges, et présentant une bonne homogénéité.

### OBJET DE L'INVENTION

L'objet de la présente invention consiste en un mélange - maître et son procédé de préparation. Ce mélange - maître est constitué de granulés dont la morphologie est la plus à même d'être transportée lors de l'étape d'injection ou d'extrusion, même pour un taux de charge important. Ces granulés sont constitués de poudres, voire de nanopoudres, encapsulées dans une colle résistante mécaniquement. Ces granulés sont alors transportés lors de l'étape d'injection ou d'extrusion par un deuxième polymère qui joue le rôle de fluidifiant.

Selon un premier aspect, l'invention concerne un procédé de préparation de mélanges - maîtres pour moulage par injection ou par extrusion.

Ce procédé se caractérise par le fait que, préalablement à leur mélange avec le liant polymérique adapté à l'injection ou à l'extrusion, les particules de poudre sont soumises à une étape de granulation.

Cette étape est avantageusement réalisée par atomisation séchage, mais tout autre procédé de granulation peut convenir.

La granulation peut être réalisée en présence d'un polymère thermoplastique mécaniquement résistant, soluble ou non dans l'eau, tel que l'alcool polyvinylique (PVA). Toutefois, elle peut également être réalisée en l'absence de polymère, le caractère hydrophile des poudres pouvant suffire à leur agglomération. Cette étape permet de transformer la poudre ou nanopoudre en un granulé de forme sphérique toujours adapté aux techniques de moulage.

Avantageusement et dans une deuxième étape, le mélange entre les particules de poudre après granulation et le liant polymérique est réalisé lors d'un second cycle de granulation, avantageusement par atomisation séchage. Alternativement, ce mélange peut être réalisé par malaxage traditionnel.

Les granulés sont atomisés une seconde fois avec un liant polymérique, qui assure la fonction de fluide porteur pour l'opération ultérieure d'injection ou d'extrusion. La mise en oeuvre de cette atomisation séchage (ou tout autre opération de granulation) est réalisée de manière à ne pas toucher à la structure granulaire sphérique issue de la première opération de granulation. Alors que la première étape d'atomisation séchage peut être réalisée à haute température (par exemple 80°C), cette seconde granulation est avantageusement réalisée à température ambiante.

A noter qu'un liant polymérique adapté pour cette seconde étape de granulation et surtout pour l'injection est le PEG (glycol polyéthylénique).

Au cours de cette seconde étape de granulation, une poudre est avantageusement ajoutée au mélange. Il s'agit préférentiellement de la même poudre (ou des mêmes poudres) que celle(s) utilisées au départ, à savoir dans la première étape de granulation. Elle peut présenter la même granulométrie que celle de départ, ou une granulométrie inférieure, voire très inférieure (jusqu'à une dizaine de nanomètres). On peut également envisager d'ajouter une poudre de granulométrie quelconque et de nature chimique différente. A titre d'exemple, une poudre nanométrique Al₂O₃ peut être ajoutée à de la poudre de cuivre macroscopique de 10 microns.

Dans le cas où un malaxage traditionnel remplace le second cycle de granulation, on incorpore la poudre, avantageusement ultrafine, aux granulés issus du premier cycle d'atomisation, ainsi que les liants polymériques. Dans ce cas, on obtient une pâte chargée, constituée d'une distribution homogène de granulés, de poudre ultrafine et de liant polymérique.

Après la première étape de granulation, les granulés peuvent être déliantés et/ou préfrittés afin de leur conférer des propriétés mécaniques convenables.

A l'aide de ce procédé, on obtient un mélange - maître tout à fait remarquable à plusieurs titres :
- il peut être obtenu à partir de poudres ultrafines, voire de nanopoudres (taille de particules inférieure à 100 nm) ;
- la répartition des charges est très homogène dans le mélange.

Ce procédé possède donc les avantages suivants :
- homogénéité de composition quasi parfaite ;
- possibilité d'introduire des nanopoudres à des taux de charges importants, ce qui conduit à des retraits faibles au frittage ;
- le procédé est rapide et s'avère très peu coûteux.

La préparation du mélange - maître n'est que la première étape d'un procédé de moulage par injection qui comporte classiquement quatre étapes :
- mélange de poudre(s) avec un liant polymérique ;
- injection du mélange dans le moule ;
- déliantage de la pièce moulée ;
- frittage de la pièce moulée.

En outre, un tel mélange - maître peut être utilisé dans un procédé de moulage par extrusion comportant les étapes suivantes :
- mélange de pôudre(s) avec un liant polymérique ;
- introduction du mélange dans une filière ;
- déliantage ;
- frittage.

L'invention concerne donc également un procédé de moulage par injection (ou de microPIM) ou par extrusion, dans lequel la première étape est réalisée selon le procédé de préparation d'un mélange - maître décrit ci-dessus.

Pour certaines applications, il est souhaitable que les granulés présents dans le mélange - maître soient détruits.

Pour l'injection, cette "explosion" des granulés est réalisée au moment de l'injection dans le moule par deux opérations possibles :
- le chauffage du moule : la température du moule est telle qu'elle conduit au ramollissement du liant maintenant entre elles les nanopoudres ;
- et/ou la pression d'injection au contact des parois du moule conduit à la dégranulation des nanopoudres.

Parallèlement, pour l'extrusion, la destruction des granulés a lieu par chauffage, ou par la pression en sortie de filière.

Un tel procédé permes la réalisation d'objets en PIM, en microPIM ou en extrusion avec des détails géométriques très fins, potentiellement nanométriques, du fait de l'introduction de nanopoudres dans les feedstocks.

Le procédé permet la réalisation d'objets avec une précision géométrique très bonne, du fait du faible retrait dû à la possibilité de mettre un taux de charge important dans le mélange - maître.

Le procédé permet de transporter des poudres de départ d'une morphologie quelconque sous forme de granulés sphériques. Ceci permet donc de se passer des poudres coûteuses utilisées habituellement en PIM, issues par exemple des procédés d'atomisation au gaz permettant l'obtention de poudres sphériques.

### EXEMPLES DE REALISATION

Les exemples de réalisation qui suivent, à l'appui des figures annexées, ont pour but d'illustrer l'invention mais ne sont en aucun cas limitatifs.
La figure 1 schématise le traitement subi par les particules de poudre selon un procédé de fabrication de mélange - maître.
La figure 2 se différencie de la figure 1 en ce qu'une poudre est introduite lors de la seconde étape d'atomisation - séchage, selon le procédé de l'invention.

### Exemple 1 : Réalisation d'un mélange - maître à base de nanopoudre de silice avec un taux de charge minimum de 60% (à titre comparatif)

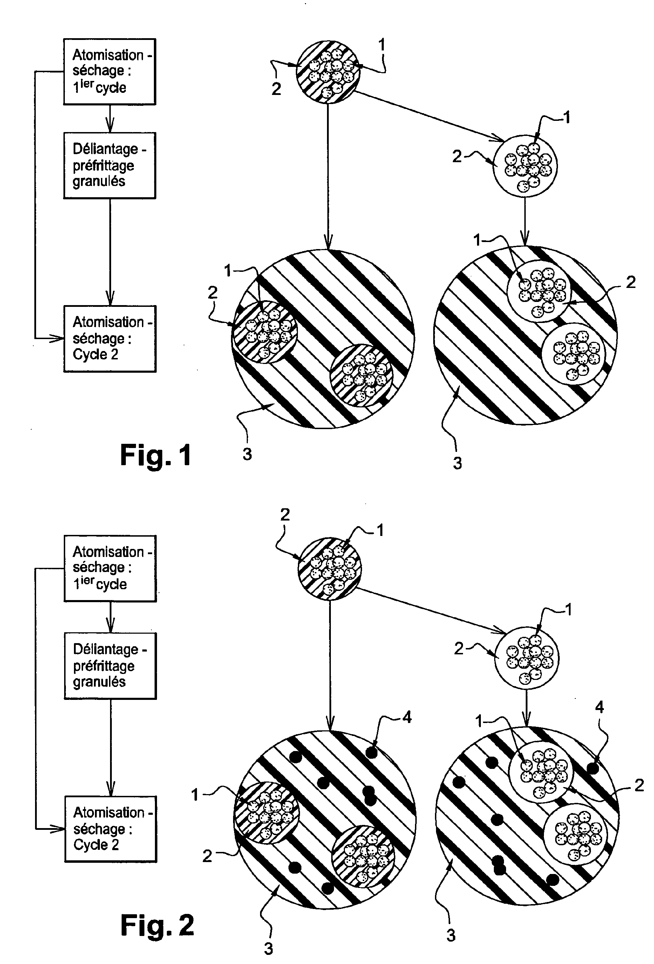

Dans cet exemple illustré à la figure 1, on part de silice nanométrique de type OX50 de DEGUSSA (1). Cette poudre présente une granulométrie moyenne de 50 nm. La poudre est d'abord agglomérée autour d'un liant de type alcool polyvinylique (PVA) (2) par atomisation séchage. Cette atomisation est effectuée à 80°C.

Après le premier cycle d'atomisation séchage, les granulés sont repris pour un deuxième cycle d'atomisation séchage avec un polymère de type PEG (glycol polyéthylénique) (3). Ce deuxième cycle est effectué à température ambiante. A cette température, le PVA reste à l'état solide et le granulé n'est pas dissous.

Le mélange-maître ainsi réalisé présente une homogénéité de composition remarquable.

Le mélange est alors mis en oeuvre dans une presse à injecter dans les conditions suivantes :
- température d'injection : 100°C ;
- température du moule : 140°C.

Le moule est ensuite refroidi avant démoulage.

### Exemple 2 : Réalisation d'une étape de déliantage - préfrittage entre les deux cycles d'atomisation séchage (à titre comparatif)

Cet exemple illustre la possibilité de maîtriser la solidité des granulés issus de la première atomisation séchage par la réalisation d'une étape de déliantage préfrittage, également représenté à la figure 1.

A l'issue de la première étape d'atomisation séchage, les granulés sont déliantés pendant une heure à 1 000°C et légèrement préfrittés. Les nouveaux granulés sont utilisés pour la seconde étape d'atomisation séchage.

Le mélange - maître à 100°C est ensuite injecté sur moule froid régulé à 30°C. La pression d'injection suffit à éclater les granulés au contact du moule.

### Exemple 3 : Ajout de poudre lors du second cycle d'atomisation (illustration de l'invention)

Dans cet exemple illustré à la figure 2, on atomise de la poudre de cuivre (1), dont les particules ont une taille de l'ordre du micron, lors du premier cycle d'atomisation séchage. Les granulés sont ensuite préfittrés au cours d'un cycle thermique à 800°C.

A cours du deuxième cycle d'atomisation, on rajoute de la poudre ultrafine (4), dont les particules ont une taille de l'ordre de 1 micron. La quantité rajoutée est du même ordre de grandeur que la quantité ajoutée lors du premier cycle d'atomisation.

Dans cet exemple, l'ajout de la poudre ultrafine dans le deuxième cycle permet d'obtenir des taux de charge importants mais également d'améliorer la tenue mécanique des pièces déliantées.

### Exemple 4 : Réalisation de la premier étape d'atomisation séchage en l'absence de polymère (à titre comparatif)

Les conditions d'élaboration du mélange - maître sont comparables à celles décrites dans l'exemple 2, mais la poudre d'OX50 de DEGUSSA est atomisée sans liant organique. Le caractère hydrophile des poudres suffit à agglomérer les nanopoudres après la première opération d'atomisation séchage. Dans un deuxième temps, les granulés sont directement préfrittés à 1.000°C. Les granulés ainsi générés sont utilisés pour la seconde étape d'atomisation séchage.

De la même manière, le mélange - maître à 100°C est injecté sur moule froid régulé à 30°C. La pression d'injection suffit à éclater les granulés au contact du moule.

### Exemple 5 : Fabrication d'une membrane de filtration par moulage par injection (à titre comparatif)

Les conditions d'élaboration du mélange - maître sont comparables à celles décrites dans l'exemple 2, mais la poudre d'OX50 de DEGUSSA est atomisée sans liant organique. Le caractère hydrophile des poudres suffit à agglomérer les nanopoudres après la première opération d'atomisation séchage.

Dans un deuxième temps, les granulés sont directement préfrittés à 1.100°C afin de leur conférer de meilleures propriétés mécaniques. Les granulés ainsi générés sont utilisés dans la seconde étape d'atomisation séchage.

Le mélange - maître à 100°C est injecté sur moule froid régulé à 30°C. Dans cet exemple, la meilleure tenue mécanique des granulés, liée à la température élevée de préfrittage empêche les granulés d'exploser sous la pression d'injection. Le maintien de la poudre sous forme de granulés est souhaité pour l'application finale visée, à savoir la fabrication de membranes de filtration.

### Exemple 6 : Réalisation d'une pièce en alumine (à titre comparatif)

Dans cet exemple, on fabrique une pièce en alumine en partant de poudres en forme de bâtonnets de 120 nm de long et 50 nm de large. Les bâtonnets sont atomisés dans les mêmes conditions que celles décrites dans les exemples 1 et 2, à savoir en présence de PVA. Les granulés résultant de cette atomisation sont réatomisés dans du PEG, avec un taux de charge total de 65%.

Le mélange maître à 100°C est ensuite injecté sur moule froid régulé à 30°C. La pression d'injection suffit à éclater les granulés au contact du moule.

## Revendications

1. Procédé pour la préparation d'un mélange - maître pour moulage par injection ou par extrusion, constitué de poudres inorganiques associées à un liant polymérique, comprenant les étapes suivantes :
- les particules constitutives des poudres inorganiques sont soumises à une étape de granulation, préalablement à leur mélange avec le liant polymérique ;
- le mélange entre les particules après granulation et le liant polymérique est réalisé lors d'une nouvelle étape de granulation,
***caractérisé* en ce qu'**une poudre est ajoutée au mélange au cours de la nouvelle étape de granulation.

2. Procédé de préparation d'un mélange - maître selon la revendication 1 ***caractérisé* en ce qu'**il s'agit de la même poudre que celle utilisée dans la première étape de granulation.

3. Procédé de préparation d'un mélange - maître selon la revendication 1 ou 2, ***caractérisé* en ce qu'**au moins la première étape de granulation, préférentiellement les deux, est réalisée par la technique d'atomisation séchage.

4. Procédé de préparation d'un mélange - maître selon l'une des revendications précédentes, ***caractérisé* en ce qu'**une étape de déliantage et/ou de préfrittage est mise en oeuvre après la première étape de granulation.

5. Procédé de préparation d'un mélange - maître selon l'une des revendications précédentes, ***caractérisé* en ce que** les particules constitutives des poudres inorganiques ont une taille inférieure à 100 nm.

6. Procédé de moulage par injection comprenant les étapes suivantes :
- préparation d'un mélange - maître selon le procédé décrit à l'une des revendications 1 à 5 ;
- injection du mélange - maître dans le moule ;
- déliantage ;
- frittage.

7. Procédé de moulage par injection selon la revendication 6, ***caractérisé* en ce que** les granulés dans le mélange - maître sont détruits au cours de l'injection dans le moule.

8. Procédé de moulage par injection selon la revendication 7, ***caractérisé* en ce que** les granulés dans le mélange - maître sont détruits par chauffage du moule.

9. Procédé de moulage par injection selon la revendication 7 ou 8, ***caractérisé* en ce que** les granulés dans le mélange - maître sont détruits par la pression d'injection.

10. Procédé de moulage par extrusion comprenant les étapes suivantes :
- préparation d'un mélange - maître selon le procédé décrit à l'une des revendications 1 à 5 ;
- introduction du mélange - maître dans une filière ;
- déliantage ;
- frittage.

11. Procédé de moulage par extrusion selon la revendication 10, ***caractérisé* en ce que** les granulés dans le mélange - maître sont détruits en bout de filière.

12. Procédé de moulage par extrusion selon la revendication 11, ***caractérisé* en ce que** les granulés dans le mélange - maître sont détruits par le chauffage.

13. Procédé de moulage par extrusion selon la revendication 11 ou 12, ***caractérisé* en ce que** les granulés dans le mélange - maître sont détruits par la pression en sortie de filière.

## Claims

1. Method for preparing a feedstock for injection moulding or extrusion, consisting of inorganic powders combined with a polymeric binder, comprising the following steps:
- the constituent particles of the inorganic powders are subjected to a granulation step, prior to their being mixed with the polymeric binder;
- the mixing between the particles after granulation and the polymeric binder is carried out during a new granulation step,
***characterized* in that** a powder is added to the mix during the new granulation step.

2. Method for granulating a feedstock according to claim 1, ***characterized* in that** the powder used is the same as that used in the first granulation step.

3. Method for preparing a feedstock according to either of claims 1 and 2, ***characterized* in that** at least the first granulation step, preferably both, is carried out by the spray draying technique.

4. Method for preparing a feedstock according to one of the preceding claims, ***characterized* in that** a binder removal and/or presintering step is carried out after the first granulation step.

5. Method for preparing a feedstock according to one of the preceding claims, ***characterized* in that** the constituent particles of the inorganic powders have a size smaller than 100 nm.

6. Injection moulding method comprising the following steps:
- preparation of a feedstock by the method described in one of claims 1 to 5;
- injection of the feedstock into the mould;
- binder removal;
- sintering.

7. Injection moulding method according to claim 6, ***characterized* in that** the granules in the feedstock are destroyed during the injection into the mould.

8. Injection moulding method according to claim 7, ***characterized* in that** the granules in the feedstock are destroyed by heating the mould.

9. Injection moulding method according to either of claims 7 and 8, ***characterized* in that** the granules in the feedstock are destroyed by the injection pressure.

10. Extrusion moulding method comprising the following steps:
- preparation of a feedstock by the method described in one of claims 1 to 5;
- injection of the feedstock into the die;
- binder removal;
- sintering.

11. Injection moulding method according to claim 10, ***characterized* in that** the granules in the feedstock are destroyed at the outlet of the die.

12. Injection moulding method according to claim 11, ***characterized* in that** the granules in the feedstock are destroyed by the heating.

13. Injection moulding method according to either of claims 11 or 12, ***characterized* in that** the granules in the feedstock are destroyed by the pressure at the outlet of the die.

## Patentansprüche

1. Verfahren zur Herstellung einer Vormischung zum Spritzgießen oder Strangpressen, bestehend aus anorganischen Pulverstoffen, die mit einem Polymerbindemittel verbunden sind, folgende Schritte umfassend:
- die Partikel, aus denen die anorganischen Pulverstoffe bestehen, werden vor ihrem Vermengen mit dem Polymerbindemittel einem Granulierungsschritt unterzogen;
- das Vermengen zwischen den Partikeln nach der Granulierung und dem Polymerbindemittel erfolgt bei einem neuen Granulierungsschritt,
**dadurch gekennzeichnet, dass** während des neuen Granulierungsschritts der Mischung ein Pulver zugesetzt wird.

2. Verfahren zur Herstellung einer Vormischung nach Anspruch 1, **dadurch gekennzeichnet, dass** es sich um dasselbe Pulver wie dasjenige handelt, das im ersten Granulierungsschritt verwendet wird.

3. Verfahren zur Herstellung einer Vormischung nach Anspruch 1 oder 2, **dadurch gekennzeichnet, dass** zumindest der erste Granulierungsschritt, vorzugsweise beide Granulierungsschritte, durch ein Zerstäubungstrocknungsverfahren erfolgt/erfolgen.

4. Verfahren zur Herstellung einer Vormischung nach einem der vorhergehenden Ansprüche, **dadurch gekennzeichnet, dass** nach dem ersten Granulierungsschritt ein Schritt des Entziehens des Bindemittels und/oder der Entsinterung durchgeführt wird.

5. Verfahren zur Herstellung einer Vormischung nach einem der vorhergehenden Ansprüche, **dadurch gekennzeichnet, dass** die Partikel, aus denen die anorganischen Pulverstoffe bestehen, eine Größe von weniger als 100 nm haben.

6. Spritzgießverfahren, die folgenden Schritte umfassend:
- Herstellen einer Vormischung nach dem in einem der Ansprüche 1 bis 5 beschriebenen Verfahren;
- Einspritzen der Vormischung in die Form;
- Entzug des Bindemittels;
- Sintern.

7. Spritzgießverfahren nach Anspruch 6, **dadurch gekennzeichnet, dass** die Körner in der Vormischung während des Einspritzens in die Form zerstört werden.

8. Spritzgießverfahren nach Anspruch 7, **dadurch gekennzeichnet, dass** die Körner in der Vormischung durch Erwärmen der Form zerstört werden.

9. Spritzgießverfahren nach Anspruch 7 oder 8, **dadurch gekennzeichnet, dass** die Körner in der Vormischung durch den Einspritzdruck zerstört werden.

10. Strangpressverfahren, die folgenden Schritte umfassend:
- Herstellen einer Vormischung nach dem in einem der Ansprüche 1 bis 5 beschriebenen Verfahren;
- Einbringen der Vormischung in ein Pressmundstück;
- Entzug des Bindemittels;
- Sintern.

11. Strangpressverfahren nach Anspruch 10, **dadurch gekennzeichnet, dass** die Körner in der Vormischung am Ende des Pressmundstücks zerstört werden.

12. Strangpressverfahren nach Anspruch 11, **dadurch gekennzeichnet, dass** die Körner in der Vormischung durch Erwärmung zerstört werden.

13. Strangpressverfahren nach Anspruch 11 oder 12, **dadurch gekennzeichnet, dass** die Körner in der Vormischung durch den Druck am Ausgang des Pressmundstücks zerstört werden.
